# EUROPÄISCHE PATENTSCHRIFT

(11) **EP 2 435 262 B1**
(45) Veröffentlichungstag und Bekanntmachung des Hinweises auf die Patenterteilung: **17.04.2013**
(21) Anmeldenummer: 10787486.9
(22) Anmeldetag: 09.12.2010
(51) Int. Cl.: B60C 23/04

(54) **RADELEKTRONIK, FAHRZEUGRAD UND FAHRZEUG**
WHEEL ELECTRONICS UNIT, VEHICLE WHEEL AND VEHICLE
ÉLECTRONIQUE DE ROUE, ROUE ET VOITURE

(30) Priorität: 21.12.2009 DE 102009059789
(43) Veröffentlichungstag der Anmeldung: 04.04.2012
(73) Patentinhaber: Continental Automotive GmbH, 30165 Hannover (DE)
(72) Erfinder: FINK, Alexander, 93055 Regensburg (DE)
(86) Internationale Anmeldenummer: PCT/EP2010/069286
(87) Internationale Veröffentlichungsnummer: WO 2011/085878

(56) Entgegenhaltungen:
- EP-A1- 1 419 907
- DE-A1- 10 342 297
- US-A1- 2005 156 722
- US-A1- 2006 179 930

## Beschreibung

Die vorliegende Erfindung bezieht sich auf eine Radelektronik, ein Fahrzeugrad und ein Fahrzeug.

Der Reifendruck eines Fahrzeugrades unterliegt aufgrund verschiedenster Ursachen, zum Beispiel dem Umgebungsdruck des Rades, Temperatur, Alter des Rades, etc., bestimmten Änderungen. In diesem Zusammenhang wurde festgestellt, dass ein falsch eingestellter Reifendruck einen wesentlichen Faktor bei Unfällen im Straßenverkehr darstellt. Da die Fahrzeugsicherheit und Zuverlässigkeit zentrale Faktoren im Automobilbereich sind, muss allein schon aus sicherheitstechnischen Gründen der Reifendruck regelmäßig überprüft werden. Studien haben aber gezeigt, dass nur wenige Fahrer eines Fahrzeugs den Reifendruck regelmäßig prüfen.

Moderne Kraftfahrzeuge weisen unter anderem aus diesen Gründen Reifeninformationsvorrichtungen auf. Diese Reifeninformationsvorrichtungen weisen im Fahrzeugrad verbaute Radelektroniken auf, die radspezifische Messwerte verschiedener Messgrößen (z.B. Reifendruck, Reifentemperatur, Radlast, etc.) messen und davon abgeleitete Informationen an eine fahrzeugseitige Empfangsrichtung senden. Die Radelektronik kann auch zur Radlokalisation eingesetzt werden.

Aus der DE 10342297A1 ist ein Verfahren zur Ermittlung der Radposition von Rädern eines Kraftfahrzeugs bekannt, wobei zumindest einem Rad zu Überwachungszwecken eine elektronische Radeinheit zugeordnet ist. Die Feldstärke von durch die Radeinheiten ausgesendeten und empfangenen Datensignalen werden ausgewertet und anhand der ausgewerteten Feldstärke wird die jeweilige Radposition bestimmt.

Die EP 1419907A1 beschreibt eine Reifendruckkontrollvorrichtung mit einem Magnetfeldgenerator, der in der Nähe des Reifens angeordnet ist, und einem Magnetfelddetektor in der Radeinheit.

Aus der US 2006/0179930A1 ist eine Radeinheit vorbekannt, die nur innerhalb eines Teils jeder Umdrehung des Reifens mit einer fahrzeugseitigen Empfangseinheit kommuniziert.

Die US 2005/0156722A1 beschreibt eine Radeinheit mit einem Schocksensor, der ein Signal erzeugt, das eine Drehung der Radeinheit anzeigt.

Weiterhin ist aus der US2007/0260376A1 eine Radeinheit mit Beschleunigungssensor bekannt. Durch eine parallele Anordnung der Signalfilter wird eine Phasenverschiebung des gefilterten Beschleunigungssignales reduziert.

Der vorliegenden Erfindung liegt nun die Aufgabe zugrunde, eine verbesserte Radelektronik bereitzustellen.

Erfindungsgemäß wird diese Aufgabe mittels einer Radelektronik mit den Merkmalen des Patentanspruchs 1 und/oder mittels eines Fahrzeugrades mit den Merkmalen des Patentanspruchs 15 und/oder mittels eines Fahrzeugs mit den Merkmalen des Patentanspruchs 16 gelöst.

### Demgemäß ist vorgesehen:

Eine Radelektronik für eine Reifeninformationsvorrichtung, die im eingebauten Zustand in einem Fahrzeugrad eines Fahrzeugs angeordnet ist, enthaltend: einen ersten Sensor, der dazu ausgelegt ist, ein Messsignal aufzunehmen, welches zumindest einen ersten radspezifischen Parameter aufweist, und eine Auswerteeinrichtung, die dazu ausgelegt ist, aus dem Messsignal eine aktuelle Rotationsposition des Rades zum Zeitpunkt der Messung zu ermitteln.

Ein Fahrzeugrad, insbesondere für ein mit einer Reifeninformationsvorrichtung ausgestattetes Fahrzeug, welches eine Felge und einen Reifen aufweist, wobei das Fahrzeugrad ferner mindestens eine im oder an dem Fahrzeugrad angeordnete erfindungsgemäße Radelektronik aufweist.

Ein Fahrzeug, insbesondere ein Personenkraftfahrzeug, mit mehreren Rädern und mit einer Reifeninformationsvorrichtung, wobei mindestens ein Rad mit einer erfindungsgemäßen Radelektronik ausgestattet ist.

Die Auswerteeinrichtung der Radelektronik weist dabei eine Filtereinrichtung zur Filterung des ermittelten Messsignals auf. Insbesondere ist vorzugsweise eine Filtereinrichtung mit konstanter, d. h. linearer Phasenverschiebung vorgesehen. Eine solche Filtereinrichtung mit konstanter Phasenverschiebung kann vorzugsweise als Besselfilter ausgebildet sein. Diese Ausgestaltung eines Filters erleichtert die Auswertung der gemessenen Messsignale, da dadurch bekannt ist, dass das Filtern frequenz-unabhängig erfolgt.

Darüber hinaus weist die Auswerteeinrichtung eine Phasenverschiebeeinrichtung auf. Mit dieser Phasenverschiebeeinrichtung lässt sich eine durch das Filtern des Messsignals erzeugte Phasenverschiebung reduzieren und vorzugsweise sogar vollständig kompensieren. Insbesondere im Zusammenhang mit einer Filtereinrichtung mit konstanter, linearer Phasenverschiebung ist es vorteilhafterweise möglich, diese mittels der Phasenverschiebeeinrichtung wieder rückgängig zu machen und damit zu kompensieren. Dies erfolgt beispielsweise durch einfaches Herausrechnen der bekannten konstanten Phasenverschiebung solange, bis das Messsignal wieder phasenrichtig vorliegt.

Die der vorliegenden Erfindung zugrunde liegende Idee besteht darin, bei einer Radelektronik, wie sie in oder für eine Reifeninformationsvorrichtung verwendbar ist, einen Sensor zur Ermittlung radspezifischer Parameter bereitzustellen. Solche an sich bekannten Sensoren bei Radelektroniken werden üblicherweise dazu verwendet, Informationen aus gemessenen radspezifischen Parametern über eine Sendeeinrichtung an eine fahrzeugseitige Empfangseinrichtung zu senden. Bei der vorliegenden Erfindung werden die von dem Sensor gemessenen radspezifischen Parameter und Messwerte nun zusätzlich einer eigens in der Radelektronik vorgesehenen Auswerteeinrichtung zugeführt, wo sie dann ausgewertet werden. Mittels der Auswerteeinrichtung wird dann aus den gemessenen, ersten radspezifischen Parametern die aktuelle Rotationsposition des Fahrzeugrades bestimmt. Die Radelektronik sowie der in der Radelektronik vorgesehene erste Sensor werden dadurch in der Funktionalität erweitert. Insbesondere werden durch die Radelektronik nun nicht mehr bloß radspezifische Parameter ausgesendet. Vielmehr wird zusätzlich oder alternativ auch eine Information gewonnen, zu welchem Zeitpunkt die Messung der radspezifischen Parameter erfolgt ist und/oder zu welchem Zeitpunkt das Aussenden der die radspezifischen Parameter enthaltenden Informationen erfolgen soll.

Vorteilhafte Ausgestaltungen und Weiterbildungen der Erfindung ergeben sich aus den weiteren Unteransprüchen in Zusammenschau mit den Figuren der Zeichnung.

In einer bevorzugten Ausgestaltung ist eine Sendeeinrichtung zur Aussendung eines Informationssignals vorgesehen. Dieses Informationssignal kann z. B. eine Information über die in der Auswerteeinrichtung ermittelte Rotationsposition des Fahrzeugrades enthalten. Zusätzlich oder alternativ kann das Informationssignal auch eine Information über zweite radspezifische Parameter enthalten. Diese zweiten radspezifischen Parameter können z. B. den aktuellen Reifendruck, das Reifenprofil, die Reifentemperatur, eine Längsbeschleunigung des Rades, eine Querbeschleunigung des Rades, etc. enthalten. Darüber hinaus können hier auch Informationen vorgesehen sein, die zur Radlokalisation verwendet werden, wie etwa eine für das entsprechende Fahrzeugrad spezifische Frequenz- und/oder Amplitudenmodulation, eine in dem gesendeten Informationssignal enthaltene Seriennummer des Fahrzeugrades und dergleichen.

In einer weiterhin bevorzugten Ausgestaltung ist eine Steuervorrichtung vorgesehen, welches das Informationssignal in einer vorgebbaren Position des Fahrzeugrades oder einem vorgebbaren Winkelbereich des Fahrzeugrades aussendet. Das Aussenden des Informationssignals kann z. B. zeit- und rotationswinkel-basiert erfolgen. Dabei muss nicht notwendigerweise das Informationssignal gleichzeitig oder unmittelbar im Anschluss an dessen Ermittlung gesendet werden. Vielmehr ist es bisweilen auch vorteilhaft, wenn das Informationssignal zu einem für das Aussenden günstigen Zeitpunkt oder Winkelbereich des Fahrzeuggrades ausgesendet werden. Besonders vorteilhaft ist es, wenn das Informationssignal auf diese Weise in einem Bereich ausgesendet wird, bei dem dessen fahrzeugseitiger Empfang sichergestellt ist und bei dem beispielsweise das Fahrzeugrad und damit die darin vorgesehene Radelektronik nicht durch fahrzeugseitige Aufbauten, wie etwa dem Radkasten oder anderen Karosserieteilen, abgeschattet wird, was einen fahrzeugseitigen Empfang erschweren oder ggf. sogar verhindern würde. Indem die exakte Rotationsposition unmittelbar in der Radelektronik ermittelt wurde und damit bekannt ist, lässt sich durch das gezielte Aussenden der Informationssignale einerseits die Kommunikation zu der fahrzeugseitigen Empfangseinrichtung, insbesondere was die Qualität der Kommunikationsverbindung angeht, verbessern. Darüber hinaus lässt sich auf diese Weise auch radelektronikseitig Energie sparen, da die Radelektronik die gesendeten Informationssignale gewissermaßen nicht mehr "planlos" an die fahrzeugseitige Empfangseinrichtung senden muss. Insbesondere kann hier sogar auf ein mehrfaches redundantes Senden oder ein energieaufwändiges Sendeempfangsprotokoll verzichtet werden. Alternativ könnte die Sendesignale bewusst auf alle Winkelbereiche zwischen 0° und 360° zu verteilen, z.B. durch Hinzufügen einer willkürlichen Wartezeit, so dass sichergestellt wird, dass zumindest ein bestimmter Anteil der gesendeten Sendesignale fahrzeugseitig auch empfangen werden.

Daneben kann es auch vorteilhaft sein, wenn die Steuereinrichtung das Informationssignal während einer oder mehrerer Umdrehungen des Rades mehrfach, beispielsweise 3 bis 5 mal, aussenden. Das mehrfache Aussenden kann beispielsweise in statistisch nicht vorgegebenen Zeitpunkten und Rotationspositionen des Fahrzeugrades erfolgen. Durch das mehrfache Aussenden des Informationssignals und die damit einhergehende Redundanz zum Einen und durch die nicht vorgegebenen, statistisch frei gewählten Zeitpunkte des Aussendens zum Anderen wird zusätzlich gewährleistet, dass das Informationssignal z. B. noch sicherer zu der fahrzeugseitigen Empfangseinrichtung gesendet wird.

In einer bevorzugten Ausgestaltung ist der erste Sensor als Lagesensor oder als Lageschalter ausgebildet. Dieser erste Sensor ist hier dazu ausgelegt, anhand der Detektion von bekannten Referenzbereichen oder Referenzpunkten die aktuelle Rotationsposition eines vorgegebenen Punktes am Fahrzeugrad zu bestimmen.

In einer dazu alternativen Ausgestaltung kann der erste Sensor auch als magnetisch-sensitiver Sensor ausgebildet sein. Ein solcher magnetisch-sensitiver Sensor ist z. B. ein Hallsensor oder ein Reed-Schalter. Der magnetisch-sensitiver Sensor ist dazu ausgelegt, die aktuelle Rotationsposition des Fahrzeugrades durch Messung eines bekannten Magnetfeldes zu bestimmen. Dieses bekannte Magnetfeld kann beispielsweise durch einen an der Karosserie des Fahrzeugs angebrachten Elektromagneten oder Permanentmagneten erzeugt werden. Typischerweise ist dieser Magnet an einer bekannten, fest vorgegebenen Position an der Karosserie des Fahrzeuges, beispielsweise im Radkasten, angebracht. Der Sensor kann auch auf die Auswertung des Erdmagnetfelds ausgelegt sein, um seine Rotationsposition zu ermitteln.

In einer dazu alternativen Ausgestaltung ist der erste Sensor als ein so genannter Inertialsensor ausgebildet. Ein Inertialsensor kann z. B. ein Beschleunigungssensor oder Schocksensor sein. Mittels des Beschleunigungssensors ist es möglich, die aktuelle Rotationsposition eines vorgegebenen Punktes am Fahrzeugrad anhand einer durch eine Geschwindigkeitszunahme oder Abnahme des Fahrzeugrades ermittelten Beschleunigung zu bestimmen. Über einen Schocksensor lässt sich die Ableitung der so ermittelten Beschleunigung und damit die aktuelle Rotationsposition bestimmen.

In einer besonders bevorzugten Ausgestaltung ist der erste Sensor als Piezosensor ausgebildet ist. Der Piezosensor ist dazu ausgebildet, Veränderungen der Krümmung des Reifens des Fahrzeugrades zu bestimmen. Der Piezosensor kann dabei je nach dem welche Veränderung er detektieren soll, als Verformungssensor, Biegesensor, Stauchungssensor und/oder Dehnungssensor ausgebildet sein.

In einer bevorzugten Ausgestaltung ist die Auswerteeinrichtung dazu ausgebildet, eine gravitations-basierte Auswertung der Messsignale vorzunehmen. Insbesondere kann die Auswerteeinrichtung eine gemessene Beschleunigung oder die Ableitung der gemessenen Beschleunigung für die gravitations-basierte Auswertung heranziehen.

In einer ebenfalls bevorzugten Ausgestaltung weist die Auswerteeinrichtung eine Abtasteinrichtung, die zur Ermittlung von Abtastwerten des typischerweise analog vorliegenden Messsignals dieses Messsignal abtastet. Die Auswertung erfolgt in der Auswerteeinrichtung dann typischerweise digital, z. B. anhand der ermittelten Abtastwerte des Messsignals.

In einer bevorzugten Ausgestaltung ist ein Geschwindigkeitssensor vorgesehen, der die aktuelle Geschwindigkeit des Fahrzeugrades oder des Fahrzeugs ermittelt. Die Abtasteinrichtung ist ferner dazu ausgebildet, eine adaptive Anpassung der Abtastzeitpunkte vorzunehmen. Diese adaptive Anpassung der Abtastzeitpunkte erfolgt, indem abhängig von der ermittelten Geschwindigkeit des Fahrzeugrades ein Abtasten des Messsignals vorgenommen wird. Das Messsignal ist typischerweise ein von der Fahrzeuggeschwindigkeit und damit von der Winkelgeschwindigkeit des Fahrzeugrades abhängiger Messwert. Indem nun eine adaptive Anpassung der Abtastzeit vorgenommen wird, wird diesen unterschiedlichen Geschwindigkeiten Rechnung getragen. Damit wird beispielsweise eine Periode des Messsignals, welches einer Umdrehung des Fahrzeugrades entspricht, immer durch konstante, vorgegebene Abtastungen gemessen. Dies erhöht die Präzision der Abtastung und damit der Messung vor allem bei sehr großen Winkelgeschwindigkeiten des Fahrzeugrades.

Zusätzlich oder alternativ wäre auch denkbar, dass die Information über die aktuelle Geschwindigkeit des Fahrzeugrades bzw. des Fahrzeuges fahrzeugseitig ermittelt wird und über eine fahrzeugseitige Sendeeinrichtung der Radelektronik übermittelt wird. In diesem Falle müsste die Radelektronik auch eine radseitige Empfangseinrichtung und Auswerteeinrichtung aufweisen, die das fahrzeugseitig gesendete Signal aufnehmen und auswerten kann, um so die Geschwindigkeit zu ermitteln. Dies ist allerdings Schaltungs- und Rechen-aufwändiger.

In einer bevorzugten Ausgestaltung ist zumindest ein zweiter Sensor vorgesehen, der dazu ausgelegt ist, zweite radspezifische Parameter zu ermitteln. Mittels der ersten radspezifischen Parameter wurden, wie bereits vorstehend erläutert wurde, solche Parameter ermittelt, die für die Bestimmung der aktuellen Rotationsposition erforderlich waren. Mittels des zweiten Sensors ist es nun möglich, zusätzlich weitere radspezifische Parameter, wie etwa den aktuellen Reifendruck, die Reifentemperatur, das Reifenprofil, eine Beschleunigung des Fahrzeugrades und dergleichen zu ermitteln und in Form eines Informationssignals von der radseitigen Sendeeinrichtung zu der fahrzeugseitigen Empfangseinrichtung zu senden. In einer besonders bevorzugten Ausgestaltung ist lediglich ein einziger Sensor vorgesehen, der die Funktionalitäten des ersten und zweiten Sensors in sich vereint. Insbesondere ist dies dann von Vorteil, wenn z. B. durch den ersten Sensor bereits solche Informationen gemessen wurden, die nicht nur zur Ermittlung der Radposition erforderlich sind, sondern die auch an die fahrzeugseitige Empfangseinrichtung zur weiteren Auswertung in der Fahrzeuginformationsvorrichtung gesendet werden. Solche Informationen können z. B. die Beschleunigung des Fahrzeugrades, eine Gravitationsinformation, der Reifendruck und dergleichen sein.

In einer Ausgestaltung des erfindungsgemäßen Fahrzeugrades kann die Radelektronik z.B. an der Radfelge angebracht sein. Alternativ wäre auch denkbar, wenn die Radelektronik im Reifen des Fahrzeugrades einvulkanisiert ist oder mittels einer eigens dafür vorgesehenen Klemmeinrichtung im Inneren des Reifenmantels, beispielsweise im Bereich der Lauffläche, eingeklemmt ist. Denkbare wäre auch, den Sensor in die Lauffläche des Reifenmantels zu kleben. Alternativ dazu kann auch ein Container in die Lauffläche geklebt werden, in den dann der Sensor eingebracht wird.

Als vorgebbare Rotationsposition des Fahrzeugsrades kann eine oder mehrere der Rotationspositionen aus der folgenden Gruppe gewählt werden:
- Erreichen einer vorgegebenen Winkelstellung des Fahrzeugrades bezogen auf den das Fahrzeugrad umgebenden Raum;
- Latscheingang, also den Eintritt eines vorgegebenen Punktes am Radumfang des Fahrzeugrades in die Radaufstandsfläche (den so genannten Latsch);
- Latschausgang, d. h. den Austritt eines vorgegebenen Punktes am Radumfang des Fahrzeugrades in die Radaufstandsfläche;
- Latschmitte bzw. unterste Position des Fahrzeugrades, d. h. das Erreichen eines vorgegebenen Punktes am Radumfang des Fahrzeugrades in der Mitte der Radaufstandsfläche;
- Erreichen der obersten Position des Fahrzeugrades;
- 3-Uhr Position oder 9-Uhr Position, d. h. das Erreichen einer Position des Fahrzeugrades zwischen der obersten Position des Fahrzeugrades und der untersten Position des Fahrzeugrades bzw. der Mitte der Radaufstandsfläche.

Daneben ist natürlich auch eine beliebig andere fest vorgegebene Rotationsposition möglich. Alternativ dazu wäre auch möglich, dass die Radelektronik das Aussenden der Informationssignale zu beliebigen Rotationspositionen vornimmt, die Übertragung der Informationssignale jedoch eine Information über die aktuelle Rotationsposition des Fahrzeugrades, bei dem die Informationen gerade gesendet werden, mitsenden. Dies erfordert nicht die Erkennung einer dezidierten Radposition, sondern die kontinuierliche Bestimmung der aktuellen Rotationsposition.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den Figuren der Zeichnung angegebenen Ausführungsbeispiele näher erläutert. Es zeigen dabei:
- Fig. 1: eine schematische Darstellung eines mit einer erfindungsgemäßen Reifeninformationsvorrichtung ausgestatteten Fahrzeugs;
- Fig. 1A, 1B: eine schematische Darstellung eines erfindungsgemäßen Fahrzeugrades bzw. einer erfindungsgemäßen Radelektronik;
- Fig. 1C: ein bevorzugtes Ausführungsbeispiel einer erfindungsgemäßen Radelektronik in Blockschaltbilddarstellung;
- Fig. 2: verschiedene rotatorische Positionen eines vorgegebenen Punktes, z. B. der Radelektronik, auf ein Fahrzeugrad;
- Fig. 3: den Verlauf eines Messsignals eines an einem Fahrzeugrad angebrachten Piezosensor;
- Fig. 4A, 4B: schematisch den Verlauf eines Beschleunigungssensors bezogen auf verschiedene rotatorische Positionen eines Fahrzeugrades;
- Fig. 5: einen Sensor für eine felgenbasierte Radelektronik;
- Fig. 5A, 5B: die Geschwindigkeit und Beschleunigung in Abhängigkeit von der Zeit für eine felgenbasierte Radelektronik entsprechend Fig.5;
- Fig. 6: eine vollständige Schwingung eines von einem Beschleunigungssensor aufgenommenen Messsignals;
- Fig. 7: ein typisches Abtastszenario für die Schwingung eines von einem Beschleunigungssensor aufgenommenen Messsignals;
- Fig. 7A, 7B: eine Über- bzw. Unterabtastung eines von einem Beschleunigungssensor aufgenommenen Messsignals;
- Fig. 7C, 7D: eine adaptive Abtastung im Falle der Signale aus den Fig. 7A, B;
- Fig. 8: ein mit einem Rauschsignal überlagertes Messsignal;
- Fig. 8A - 8C: verschiedene, durch Filterung erzeugte Phasenverschiebungen bei einem Messsignal;
- Fig. 9A, 9B: exemplarisch das Verhalten eines Besselfilters auf das von einem Beschleunigungssensor aufgenommene Messsignal in Abhängigkeit von der Zeit;
- Fig. 10A, 10B: exemplarisch die Signalverläufe der von einem Beschleunigungssensor aufgenommenen Beschleunigungssignale abhängig von der Zeit mit Abtastung und Filterung;
- Fig. 11: den Verlauf der Feldstärken der von den vier Radelektroniken der Fahrzeugräder ausgesendeten Sendesignale;
- Fig. 12: die Unterteilung eines von einer Radelektronik ausgesendeten Signals in mehrere Frames, die insgesamt einen Burst bilden.

In den Figuren der Zeichnung sind - sofern nichts Anderes ausführt ist - gleiche und funktionsgleiche Elemente, jeweils mit denselben Bezugszeichen versehen.

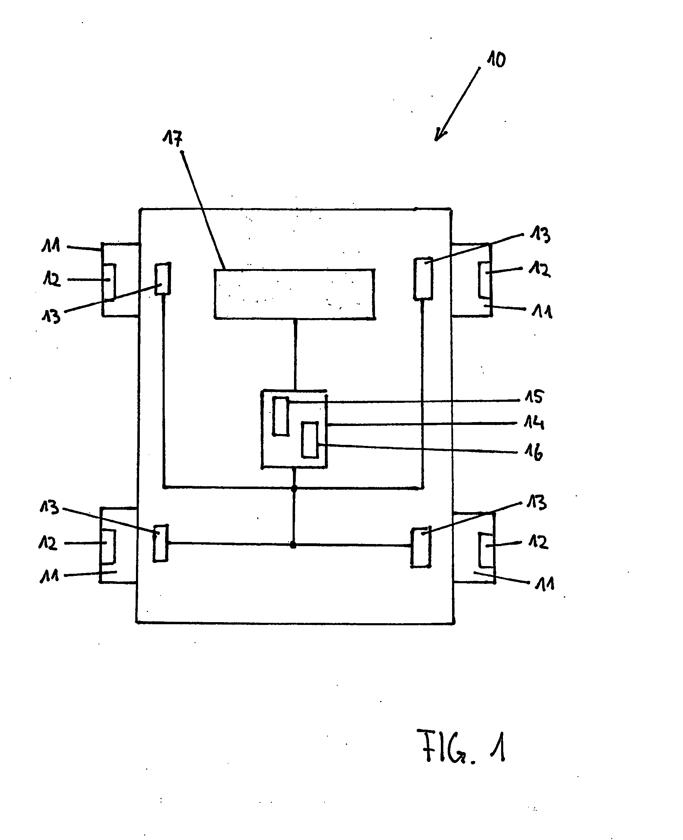

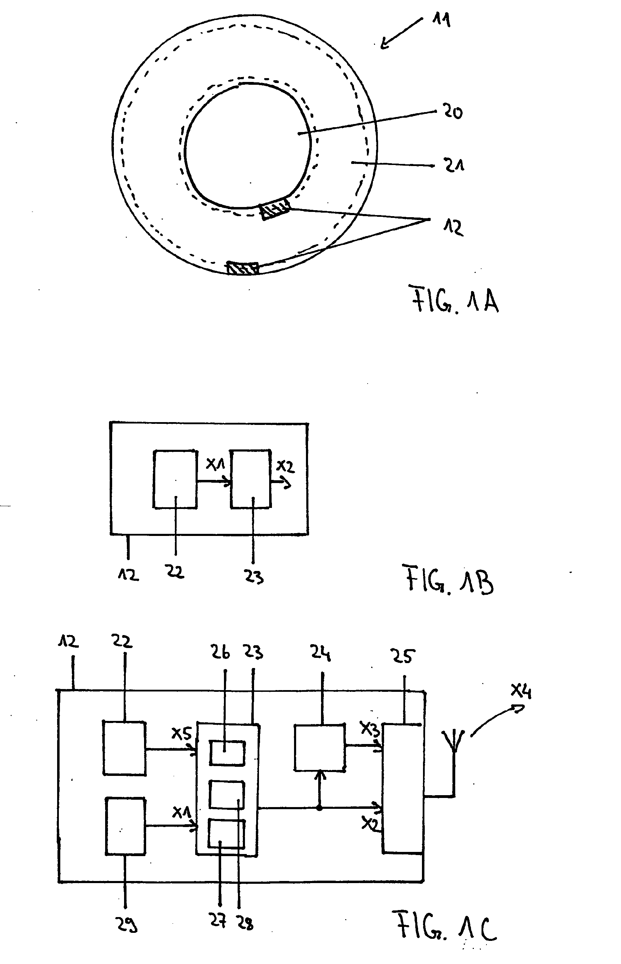

Fig. 1 zeigt eine schematische Darstellung eines mit einer Reifendruckkontrollvorrichtung ausgestatten Fahrzeugs. Das hier mit Bezugszeichen 10 bezeichnete Fahrzeug weist vier Räder 11 auf. Jedem Rad 11 ist eine Radelektronik 12 zugeordnet. Fahrzeugseitig ist jedem dieser Radelektroniken 12 eine Sende-/Empfangseinheit 13 zugeordnet, die z.B. mit der jeweils ihr zugeordneten Radelektronik 12 in kommunikativer Verbindung steht. Die Radelektroniken 12 und Sende-/Empfangseinheiten 13 sind insgesamt Bestandteil einer Reifeninformationsvorrichtung, welche darüber hinaus über ein zentrales Steuergerät 14 verfügt. Dieses Steuergerät 14 weist ferner eine programmgesteuerte Einrichtung 15, beispielsweise einen Mikrocontroller oder Mikroprozessor, und eine Speichereinrichtung 16, beispielsweise ein ROM oder DRAM, auf. Das Fahrzeug 10 weist darüber hinaus ein Fahrerinformationssystem 17 auf.

Die Fig. 1A, 1B zeigen schematische Darstellungen eines erfindungsgemäßen Fahrzeugrades bzw. einer erfindungsgemäßen Radelektronik, wie sie z. B. in dem Fahrzeug aus Fig. 1 verwendet werden können.

Das in Fig. 1A dargestellte Fahrzeugrad 11 weist eine Felge 20 auf, auf der in bekannter Weise ein Radreifen 21 aufgebracht ist. Die Radelektronik 12 kann nun direkt auf der Felge 20, beispielsweise im Bereich des Ventils, angebracht sein. Darüber hinaus wäre es auch denkbar, wenn die Radelektronik 12 im Bereich der Lauffläche im Inneren des Radreifens 21 angebracht ist, beispielsweise unter Verwendung einer Klemmeinrichtung. Schließlich wäre auch denkbar, wenn die Radelektronik 12 im Gummimaterial des Radreifens 21 einvulkanisiert ist.

Die in Fig. 1B dargestellte Radelektronik 12 weist in einer Minimal-Variante einen Sensor 22 auf, der dazu ausgelegt ist, ein Messsignal X1, welches zumindest einen ersten radspezifischen Parameter aufweist, aufzunehmen. Dieses Messsignal X1 wird einer Auswerteeinrichtung 23 zugeführt, die dazu ausgelegt ist, aus dem Messsignal X1 eine aktuelle Rotationsposition dieser Radelektronik 12 bezüglich des zugeordneten Fahrzeugrades 11 zu ermitteln. Die Auswerteeinrichtung 12 stellt ausgangsseitig ein Informationssignal X2 bereit, welches eine Information über die übermittelte Rotationsposition des Fahrzeugrades 11 und ggf. von weiteren radspezifischen Parametern enthält.

Fig. 1C zeigt ein bevorzugtes Ausführungsbeispiel einer erfindungsgemäßen Radelektronik 12. Neben dem ersten Sensor 22 und der Auswerteeinrichtung 23 ist hier ferner eine Steuereinrichtung 24 sowie eine Sendeeinrichtung 25 vorgesehen. Die Steuereinrichtung 24 nimmt das von der Auswerteeinrichtung 23 erzeugte Informationssignal X2 auf und steuert abhängig davon die Sendeeinrichtung 25 mit einem Steuersignal X3 an. Beispielsweise kann die Steuereinrichtung 24 abhängig von dem Informationssignal X2 festlegen, zu welchen Zeiten die Sendeeinrichtung 25 das Informationssignal X2 oder ein davon abgeleitetes Signal senden soll. Das von der Sendeeinrichtung 25 ausgesendete Sendesignal ist hier mit X4 bezeichnet.

Die Radelektronik 12 weist hier neben dem ersten Sensor 22 zumindest einen zweiten Sensor 29 auf, der zweite radspezifische Parameter, wie beispielsweise den Reifendruck oder die Reifentemperatur, ermittelt und der Auswerteeinrichtung 23 abhängig davon ein weiteres Informationssignal X5 zuführt. Vorzugsweise weist die Auswerteeinrichtung 23 darüber hinaus eine Abtasteinrichtung 26, ein Filter 27 sowie eine Phasenverschiebeeinrichtung 28 auf. Über die Abtasteinrichtung 26 wird das von dem ersten Sensor 22 bzw. zweiten Sensor 29 erzeugte analoge Informationssignal X2, X5 abgetastet. Über die Filtereinrichtung 27 wird das Informationssignal X2, X5 vor oder nach der Abtastung gefiltert und in der Phasenverschiebeeinrichtung 28 wird eine ggf. über die Filtereinrichtung 27 erzeugte Phasenverschiebung kompensiert oder zumindest reduziert.

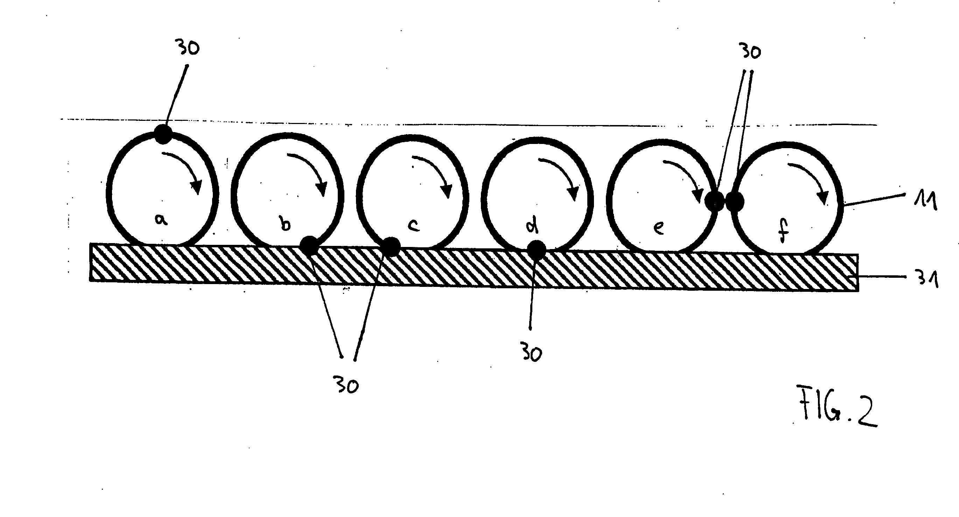

Eine der vorliegenden Erfindung zugrunde liegende Idee besteht darin, eine Radelektronik 12 bereitzustellen, die eine rotatorische Position der Radelektronik 12 bezogen auf das Fahrzeugrad 11 bestimmt und bei der so bestimmten Rotationsposition oder abhängig von der Rotationsposition in einer definierten anderen Position, z. B. zeit- oder winkel-basiert, die von der Radelektronik 12 ermittelten radspezifischen Parameter an eine fahrzeugseitige Empfangseinrichtung 13 sendet. Die Fig. 2 zeigt hierzu einige spezielle Positionen 30 mit Bezug auf den Fahrbahnbelag 31, auf dem das Fahrzeugrad 11 aufliegt. Beispielsweise kann eine obere Position a, ein Latscheingang b, ein Latschausgang c, eine Latschmitte oder unterste Position d, eine 3-Uhr Position e oder eine 9-Uhr Position f vorgesehen sein. Darüber hinaus wäre natürlich auch eine beliebige andere feste Position 30, die in Fig. 2 nicht dargestellt ist, denkbar.

In der Praxis kommt es bisweilen vor, dass eine Radorientierung bzw. vorgegebene Radposition nicht bestimmt werden kann, wenn z.B. stark verrauschte Signale vorliegen. Dies kommt z.B. dann vor, wenn eine Straße auf dem das Fahrzeug fährt, starke Unebenheiten hat. Wenn keine Orientierung oder Radposition detektiert werden kann oder auch eine Zeitüberschreitung während der Erkennung auftritt, soll dies in der Radelektronik festgestellt werden. In diesem Fall wird in der Regel immer noch ein Funktelegramm verschickt, um aktuelle Informationen über den Reifen, wie z.B. den Reifenfülldruck an das Steuergerät zur Überwachung zu senden. Hier ist es dann notwendig, dass die Radelektronik einen Hinweis im Telegramm bzw. im Sendesignal (X4), dass es sich um eine nichtorienterungsbezogene Emission handelt Dieser wird üblicherweise durch Setzen eines Bits auf 1 oder 0 im Telegramm des Sendesignals (X4) umgesetzt. Dieses Bit ist auch als Synchronisationsflag bekannt. Somit wird im Steuergerät nur die gesendete Information verarbeitet, nicht aber der Funktübertragungszeitpunkt zur Lokalisierung ausgewertet.

Nachfolgend wird die Funktions- und Arbeitsweise der Radelektronik und des darin enthaltenen Sensors beschrieben:
1. Warten auf einen für die Übertragung eines Sendesignals und des entsprechend darin enthaltenen Telegramms (so genannte Emission) vorgesehenen Übertragungszeitpunkt. Da die Radelektronik nicht kontinuierlich sendet und Funkregulierungen oft einen Mindestabstand zwischen zwei aufeinander folgenden Emissionen vorschreiben, muss die Radelektronik auf eine vorgegebene Zeitscheibe für die nächste Emission warten, z.B. alle 15 sec.
2. Detektion einer vorgegebenen Radposition oder rotatorische Position (i.e. Winkelposition des Rades) zu der das nächste Sendesignal (Sendetelegramm) gesendet werden soll. Alternativ kann auch jeweils eine aktuelle Radposition bestimmt werden, die dann im Sendetelegramm mitgesendet wird.
3. Sofern eine vorgegebene oder rotatorische Radposition bestimmt werden konnte, wird ein Synchronisations-Flag auf 1 gesetzt. Andernfalls wird das Synchronisations-Flag auf 0 gesetzt.
4. Senden des Sendesignals mit dem Sendetelegramm.
5. Rücksprung zum Schritt 1.

Auf diese Weise wird sichergestellt, dass auch benötigte Daten vom Reifensensor geschickt werden, wenn keine Bestimmung der Radposition erfolgen konnte.

Zur Detektion der rotatorischen Position 30 bzw. der rotatorischen Winkellage kommen für felgenmontierte wie auch für reifenmontierte Radelektroniken 12 verschiedene Ansätze in Frage:
- Die Radelektronik 12 bestimmt ihre rotatorische Position 30 anhand ihrer Lage im Radkasten. So kann z. B. ein Magnet in jedem Radkasten befestigt werden. Wenn die Reifenelektronik 12 in die Nähe des Magneten kommt, kann dies detektiert werden, z. B. über einen Hallsensor, Reed-Schalter oder dergleichen. Man erhält so eine feste Referenzposition für den Sensor. Alternativ könnte vielleicht auch ein im Radkasten ohnehin vorhandenes Teil detektiert werden, wie z. B. der Dämpfer.
- Die Radelektronik 12 bestimmt ihre rotatorische Position 30 mit Hilfe eines speziellen Lagesensors oder eines Lageschalters. Lagesensoren (auch Lageregelungssensoren) stellen mittels Messungen von Referenzfeldern oder Referenzpunkten (z. B. einem Magnetfeld im Bereich des Radkastens) die Lage und Orientierung des Fahrzeugrades 11 im 3-dimensionalen Raum, meistens relativ zum Fahrzeug 10 oder der Fahrbahn 31, fest.
- Bei reifenintegrierten (im Vergleich zu felgenbasierten) Radelektroniken 12, die z. B. an der Innenseite der Lauffläche des Reifens 21 angebracht sind (siehe Fig. 1A), gibt es zusätzlich die Möglichkeit, den Latschein- oder -ausgang zu detektieren. Dies kann z. B. mit Hilfe von Beschleunigungs- oder Schocksensoren erreicht werden. Ein Beschleunigungssensor ist ein Sensor oder Fühler, der die Beschleunigung misst, indem die auf eine Testmasse (z. B. das Fahrzeugrad oder die Felge) wirkende Trägheitskraft bestimmt wird. Somit kann z. B. bestimmt werden, ob eine Geschwindigkeitszunahme oder -abnahme stattfindet. Der Beschleunigungssensor gehört zur Gruppe der Inertialsensoren. Solche Inertialsensoren dienen zur Messung linearer Beschleunigungskräfte und Rotationskräfte.

Es können aber auch Piezosensoren verwendet werden, die Veränderungen der Krümmung des Reifens messen. Hier können entweder druck-sensitive Piezosensoren zum Einsatz kommen oder Piezosensoren, die eine Verformung des Piezostapels, beispielsweise eine Biegung, Streckung, Stauchung, etc. detektieren. Piezosensoren haben den zusätzlichen Vorteil, dass deren Ausgangsspannung als Triggersignal für die Steuereinrichtung der Radelektronik 12 verwendet werden kann. Dadurch ist ein aktives ständiges Abfragen des Sensors 22 nicht nötig ist, was einen hohen Energieverbrauch verhindert. Dies ist vorteilhaft, da die innerhalb der Radelektronik vorgesehenen Sensoren eine autarke Energieversorgung benötigen, z. B. eine Batterie, einen Akkumulator, einen Energiegenerator oder dergleichen. Besonderes vorteilhaft ist es, wenn ein z. B. zur Druckmessung für die Latschposition ohnehin vorgesehener Piezosensor zusätzlich zur Energieversorgung der Reifenelektronik eingesetzt wird.

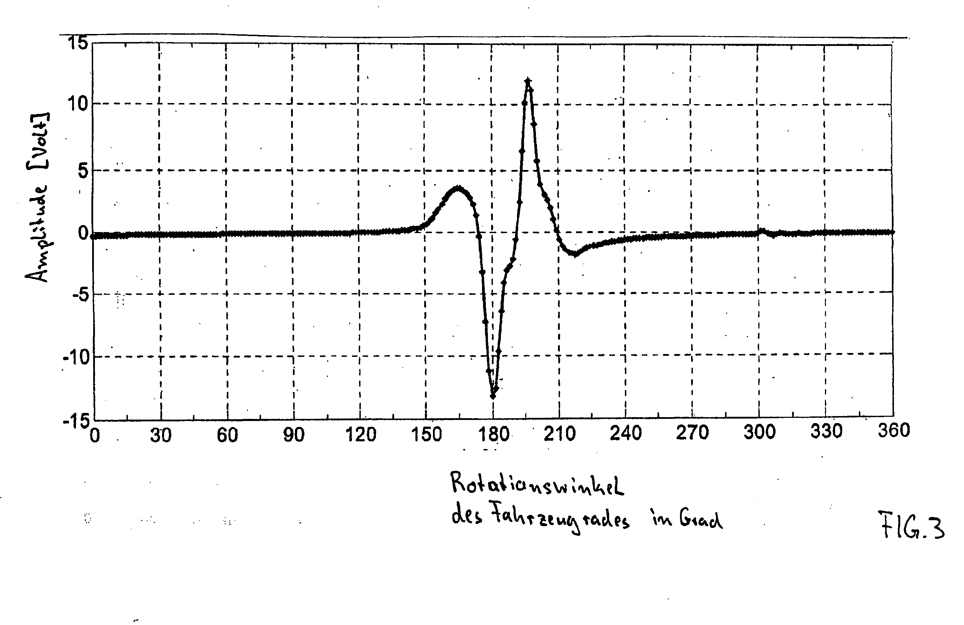

Fig. 3 zeigt den Verlauf eines von einem Piezosensor, der im Fahrzeugrad angebracht ist, aufgenommenen Signals. Dieser misst die Verformung des Reifens an der Innenseite dessen Lauffläche. Die Peaks in den aufgenommenen Messsignalen identifizieren den Latschein- bzw. -ausgang des Sensors. Diese Positionen können mittels einer Peak-Detektion bestimmt werden. Dies ist z. B. mittels einer einfachen Schwellenüberwachung oder einer Minimum- bzw. Maximumerkennung möglich.

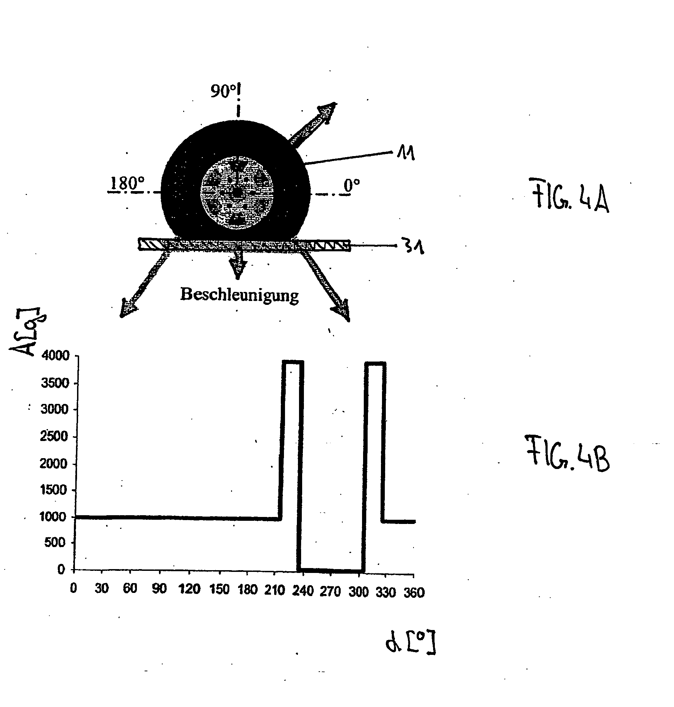

Die Fig. 4A, 4B zeigen schematisch den Verlauf der gemessenen Beschleunigung A eines Beschleunigungssensors, der im Reifen an der Lauffläche angebracht ist, in Abhängigkeit vom Rotationswinkel des Fahrzeugrades α. Es sind starke Peaks im gemessenen Signal zu erkennen, wenn der Sensor in den Latsch eintritt (Position b) bzw. austritt (Position c), also bei 240° bzw. 300°. Somit können auch hier diese Positionen b, c wie folgt bestimmt werden.
- Auswertung der Längsbeschleunigung (Beschleunigung / Abbremsen) des Fahrzeugs mit einem Beschleunigungs- oder Schocksensor in der Reifenelektronik: Z. B. können so die oberste Position a, die unterste Position d, die 3-Uhr oder 9-Uhr Positionen e, f detektiert werden. Allerdings sind die auftretenden Beschleunigungen in der Regel klein und treten auch nur fahrsituationsabhängig auf.
- Auswertung der Projektion des Gravitationsvektors auf einen Beschleunigungs- oder auch Schocksensor in der Reifenelektronik: Je nach Auswertung der resultierenden Sinuswelle (Maximumsuche, Minimumsuche, Nulldurchgangssuche) kann z. B. die oberste oder unterste Position a, d sowie die 3-Uhr oder 9-Uhr Position e, f bestimmt werden. Diese Beschleunigungen treten bei jeder Rotation auf und sind somit gut reproduzierbar zu verwenden.

Auf den Reifensensor mit Beschleunigungssensor in Z-Richtung (also radial) wirken zum Einen die Zentrifugalbeschleunigung, die durch die Rotationsbewegung des Fahrzeugrads hervorgerufen wird, und zum anderen die Gravitation. Nachfolgend wird eine gravitationsbasierte Auswertung des Messsignals erläutert:

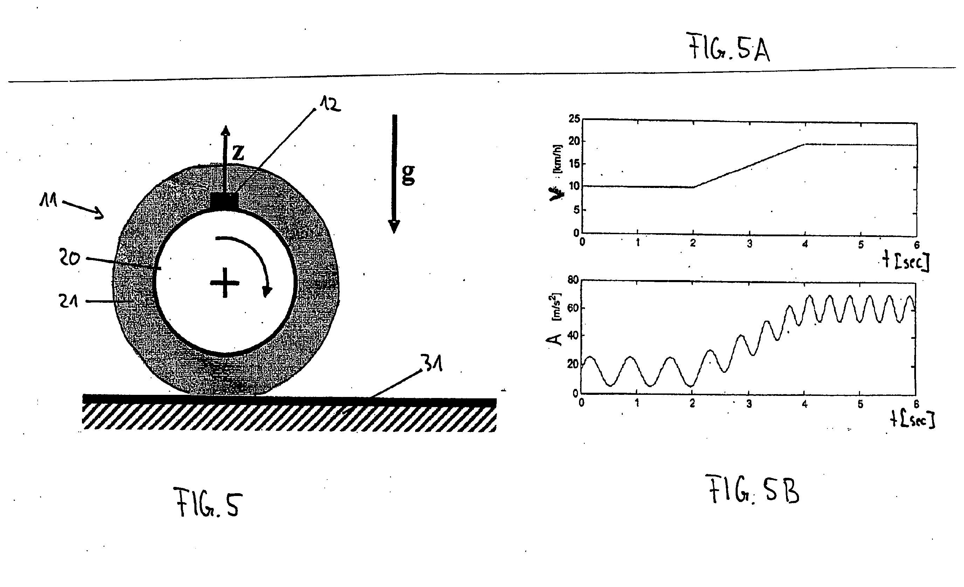

Fig. 5 zeigt einen Sensor für eine felgenbasierte Radelektronik, der aber auch für reifenbasierte Radelektroniken einsetzbar ist. Man erkennt, dass die Geschwindigkeit V einen großen Gleichanteil am Beschleunigungssignal A bewirkt (siehe Fig. 5A, 5B) und dass eine Schwingung mit der Amplitude von etwa 1g auf dem Beschleunigungssignal (Fig. 5B) aufmoduliert ist. Ferner ist erkennbar, dass die Frequenz der Schwingungen auch von der Fahrzeuggeschwindigkeit abhängt. Je größer die Fahrzeuggeschwindigkeit, desto größer ist die Umdrehungsfrequenz des Rades und umso kleiner wird die Umlaufzeit für eine Umdrehung. Anhand der Position innerhalb dieser Schwingungen ist die Rotationslage des Sensors abzulesen. Hierzu werden im Folgenden diverse Verfahren beschrieben.

Alternativ zu einem Beschleunigungssensor kann auch ein Schocksensor verwendet werden. Dieser misst nicht die Beschleunigung, sondern deren Ableitung. Bei einem Schocksensor würde im Vergleich zu der Kurve in Fig. 5B die Ableitungskurve eine mittelwertfreie Schwingung erzeugen, die jedoch auch sich ändernde Schwingungsperioden aufweist. Die Periode ist identisch zur Periode des vom Beschleunigungssensor gemessenen Signals. Dementsprechend können dann auch definierte Positionen des Signals des Schocksensors bestimmt werden. Im Unterschied zum Beschleunigungssensor man keine absolute Aussage über den Wert der Beschleunigung getroffen werden.

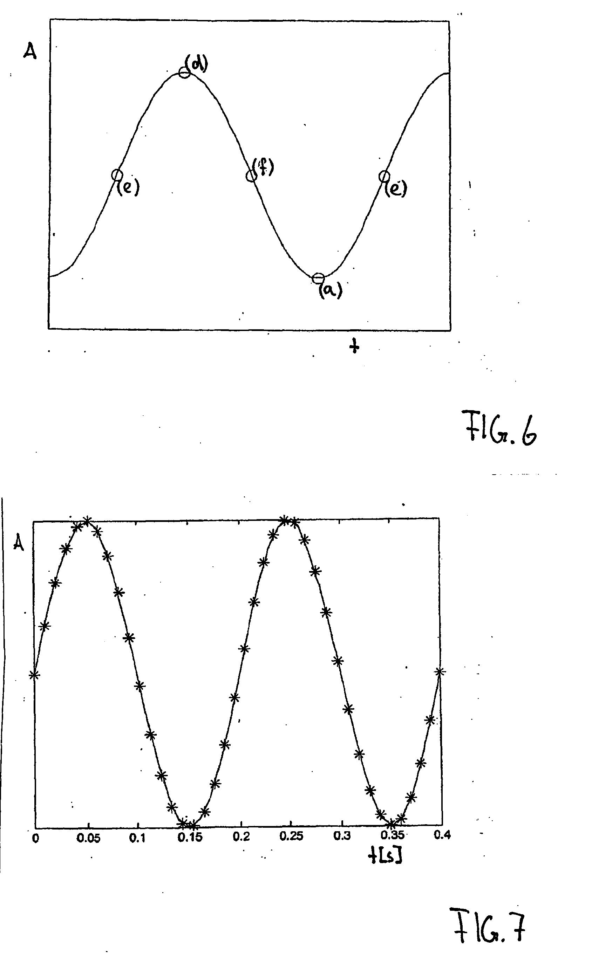

Fig. 6 zeigt eine vollständige Schwingung eines von einem Beschleunigungssensor aufgenommenen Messsignals.

Zur Detektion der Rotationspositionen muss die aufgenommene Schwingung ausgewertet werden. Hierbei entsprechen z. B. die in Fig. 2 gezeigten Positionen den folgenden Stellen der Schwingung des Beschleunigungssensors. Position d in Fig. 6 ist z. B. als lokales Maximum definiert, Position a als lokales Minimum und die Positionen e und f sind als steigende bzw. fallende Nulldurchgänge der Schwingung charakterisiert. Diese Stellen können festgelegt werden, indem die Beschleunigungswerte der Kurve abgetastet und ausgewertet werden. Hierbei ist es notwendig, dass die Kurve genügend oft abgetastet wird, um die gesuchte Position genügend genau wiederzugeben.

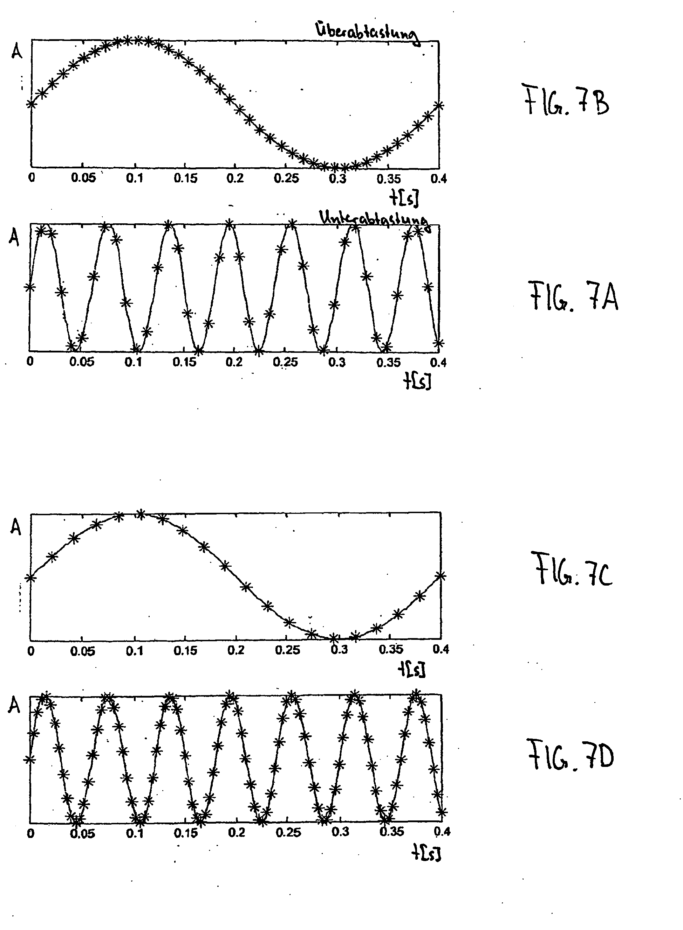

Fig. 7 zeigt ein typisches Abtastszenario. Die Schwingung kann genügend genau aufgelöst werden, wenn eine Periode mit ca. 10-30 Werten abgetastet wird.

Fig. 7A, 7B zeigen, wie die Periode der Schwingung von der Geschwindigkeit des Fahrzeugs bzw. des Rads abhängt. Bei einer konstanten Abtastzeit folgt, dass die Schwingung in unterschiedlichen Geschwindigkeitsbereichen unter- bzw. überabgetastet wird. Eine Unterabtastung (Fig. 7A) führt im Allgemeinen zu einer verschlechterten Erkennung der definierten Rotationspositionen. Eine Überabtastung (Fig. 7B) führt zu einem erhöhten Speicherplatzbedarf der abgetasteten Werte für eine Schwingung und zu einem erhöhten Energiebedarf, da jede Abtastung jeweils ein Auslesen des Beschleunigungssensors bedeutet. Da die Radelektronik entweder mit einer Batterie oder einem Energiegenerator versorgt wird und die zur Verfügung stehende Energie begrenzt ist, ist dies nicht wünschenswert.

Besonders vorteilhaft ist daher eine adaptive Wahl der Abtastzeit, wie dies in den Fig. 7C, 7D gezeigt ist. Entsprechend der Geschwindigkeit des Fahrzeugs und entsprechend der Periode der Schwingung wird die Abtastzeit definiert. Die Abtastzeit wird bestimmt, indem der Absolutwert des Beschleunigungswerts (Zentrifugalkomponente plus aufmodulierte Schwingung) ausgewertet wird. Die Zentrifugalkomponente wie auch die Schwingungsperiode hängen von der Rotationsgeschwindigkeit des Fahrzeugrades ab. Wenn die Absolutwerte der Beschleunigung nicht vorliegen, da z. B. ein Schocksensor verwendet wird, ist es möglich, die Periode der Schwingung in einem ersten Schritt zu bestimmen, z. B. durch Nulldurchgangssuche, und basierend darauf dann die Abtastzeit festzulegen. Die beiden Verfahren gehen davon aus, dass sich die Perioden der Schwingung nicht schlagartig ändern, sondern während ein paar Radumdrehungen nur leicht variieren. Da ein Fahrzeug nur im begrenzten Umfang beschleunigen oder bremsen kann, ist dieses Verfahren auch zulässig. Ferner kann die Schwingung immer noch hinreichend gut aufgelöst werden, wenn die Zahl der Abtastungen pro Periode in einem bestimmten zulässigen Bereich liegt. Dies ist auch wesentlich, da die Abtastzeit in der Praxis nicht vollkommen frei gewählt werden kann, sondern nur bestimmte Werte (aufgrund der Taktung der Radelektronik) einstellbar sind.

Die Positionserkennung, z. B. die Detektion des Schwingungsmaximums, ist anhand der Abtastungen wie in den Fig. 7-7D gezeigt, gut möglich. Es können auch einfache Algorithmen zur Maximumsuche, Minimumsuche bzw. Nulldurchgangssuche verwendet werden. In Realität liegen aber Messsignale vor, denen ein Rauschen überlagert ist, so dass vor der Abtastung und Auswertung eine Filterung des Messsignals notwendig ist.

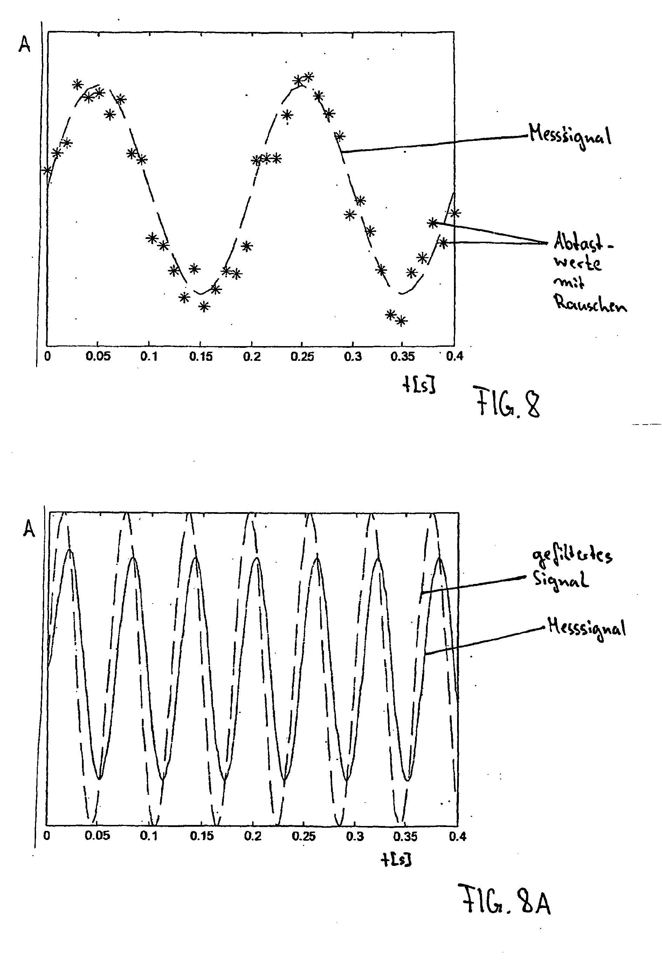

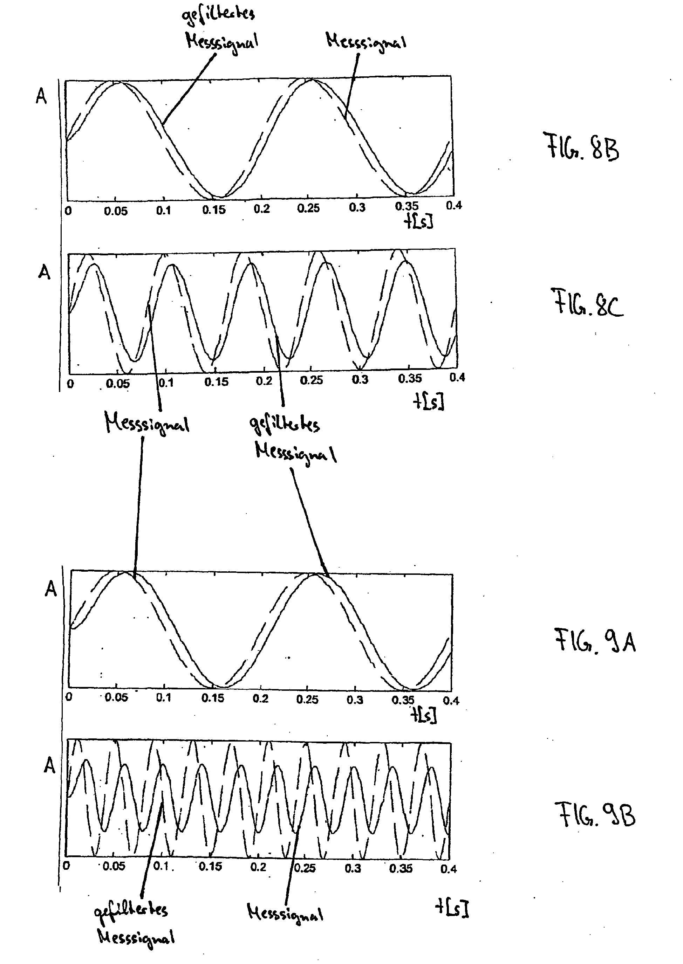

Fig. 8 zeigt ein mit einem Rauschsignal überlagertes Messsignal. Die gestrichelte Linie zeigt das zu Grunde liegende analoge, als Sinussignal ausgebildete Messsignal. Die Abtastpunkte in Fig. 8 beinhalten das überlagerte Rauschen.

Die Filterung des Messsignals bewirkt eine Glättung, die eine Auswertung und damit eine Erkennung der gewünschten Rotationsposition wieder ermöglicht. Die Filterung hat jedoch den meist unerwünschten Nebeneffekt einer Phasenverschiebung. Dies ist in Fig. 8A anhand einer Sinusschwingung (ohne Rauschen) dargestellt. In Fig. 8A ist zu erkennen, dass durch die Filterung die Amplitude der Schwingung beeinflusst wird, indem die Schwingung verzögert und damit verschoben wird. Dies hat jedoch bezüglich der Positionsbestimmung innerhalb der Schwingung keinen Einfluss, solange die Schwingung amplitudenmäßig gut aufgelöst werden kann. Relevant ist nur der Phasenversatz. Generell würde dieser Phasenversatz für das Detektionsverhalten unerheblich sein, da die detektierte Position bei einem gewählten Filter immer gleich ist. Dies trifft jedoch nur für eine feste Schwingungsfrequenz zu. Bei einem realen Fahrszenario, bei dem unterschiedliche Geschwindigkeiten und deshalb unterschiedliche Schwingungsfrequenzen vorhanden sind, führt dies zu unterschiedlichen Phasenversätzen und somit zu Problemen.

Eine Detektion (z. B. des Maximums) anhand der durchgezogenen Linien in Fig. 8B, 8C führt zu unterschiedlichen Positionen der gestrichelten Ausgangsschwingungen. Z. B. ist in Fig. 8C der Winkelversatz wesentlich höher. Dies beruht darauf, dass der Phasenversatz abhängig von der Schwingungsfrequenz ist. Theoretisch wäre es für einen Detektionsalgorithmus möglich, die jeweilige Phasenverschiebung - basierend auf der aktuellen Frequenz - zu bestimmen und zu kompensieren. Dies erfordert aber die genaue Kenntnis der Schwingungsfrequenz und ist rechenaufwändig, was auf Kosten der Energieressourcen geht.

### Prinzipiell gibt es zwei Möglichkeiten, um die Phasenverschiebung zu umgehen:

Zum Einen könnte das Eingangssignal zweimal gefiltert werden, einmal zeitlich vorwärts und dann zeitlich rückwärts unter Verwendung des gleichen Filters. Die Phasenverschiebung, die man durch die erste Filterung gewinnt, wird durch die zweite Filterung eliminiert, so dass das endgültige Ausgangssignal keine Phasenverschiebung mehr aufweist. Allerdings müssen das Eingangssignal und das Zwischenergebnis zunächst gespeichert werden, um es dann zeitlich rückwärts filtern zu können. Dies erfordert zusätzlichen Speicherbedarf und führt auch dazu, dass man die zu detektierende Position erst nach einer längeren Verarbeitungszeit detektieren kann. D. h., eine Auswertung eines aufgenommenen Messsignals der Radelektronik zeitnah zum Durchlaufen der zu detektierenden Position ist kaum realisierbar. Durch das zweifache Filtern wird zudem auch die effektive Ordnung des Filters verdoppelt.

Alternativ wäre vorteilhaft, Filter zu verwenden, die (annährend) eine konstante Phasenverschiebung über den für die Auswertung interessanten Frequenzbereich zeigen. Solche Filter sind z. B. Besselfilter, die linear in der Phase sind. Dies führt zu einer zeitlich konstanten Verschiebung der gefilterten Messkurven für alle Eingangsfrequenzen. Damit ist es möglich, diese konstante Verschiebung bei allen von den Sensoren aufgenommenen Messsignalen zu berücksichtigen und über einen Abgleichalgorithmus im fahrzeugseitigen Steuergerät zu kompensieren. Fig. 9A und 9B zeigen exemplarisch das Verhalten eines Besselfilters. Der Verlauf ist so charakterisiert, dass die zeitliche Differenz z. B. der Maxima des Eingangssignals und der Maxima des gefilterten Signals annährend gleich sind.

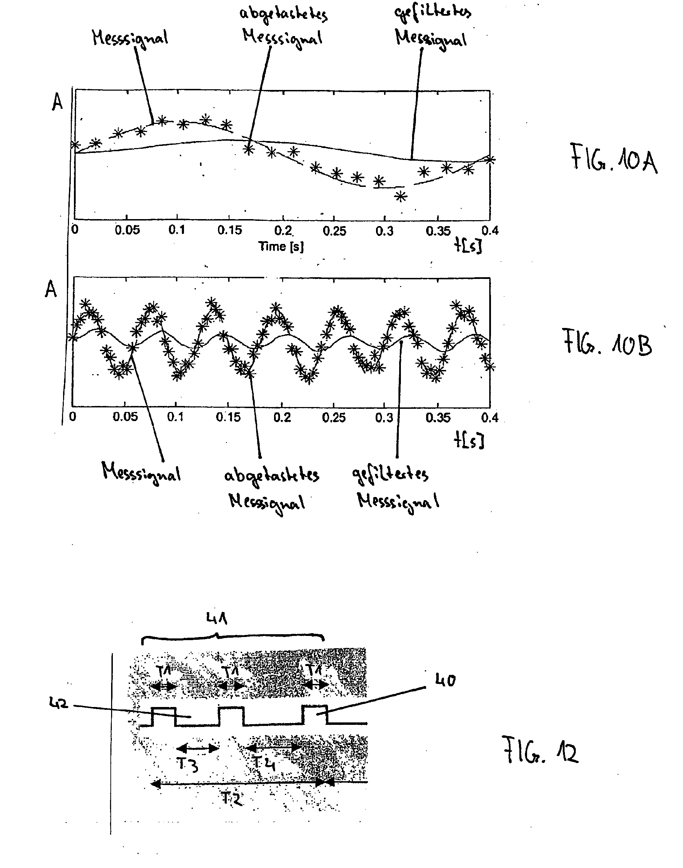

Das Problem der Phasenverschiebung lässt sich am elegantesten dadurch lösen, dass eine adaptive Abtastzeit verwendet wird und das abgetastete Signal abtast-basiert gefiltert wird (siehe Fig. 10A, 10B). Somit ist die Abhängigkeit des ursprünglichen Zeitvektors eliminiert. In Fig. 10A, 10B ist zu erkennen, dass das gefilterte Signal das ursprüngliche Messsignal in beiden Fällen an derselben Stelle schneidet, was auf eine konstante Verzögerung bezüglich der Phase (d. h. des Winkels) und nicht in der Zeit schließen lässt. Wenn z. B. das Maximum des gefilterten Signals detektiert wird, liegt dieses in Fig. 10A und Fig. 10B in der gleichen Phase des Eingangssignals. Die Verzögerung in Form einer konstanten Phase - unabhängig von der gefahrenen Geschwindigkeit bzw. Schwingungsfrequenz - hat den Vorteil, dass eine Erkennung der Rotationsposition einfach um eine konstante Winkellage verschoben ist. Da es bei dem Lokalisierungsverfahren nicht um die absoluten Lagen, sondern nur um relative Zusammenhänge ankommt, ist diese Eigenschaft sehr vorteilhaft und eine Anpassung des Algorithmus ist nicht nötig.

Bei den Übertragungen der Sendesignale existieren so genannte "Black Spots". Es handelt sich dabei um Winkelpositionen des Fahrzeugrads, an denen ein Empfang eines vollständigen Sendesignals (das so genannte Telegramm) vom fahrzeugseitigen Empfänger schwer bzw. gar nicht möglich ist. Dies ist darauf zurückzuführen, dass die Funkstrecke zwischen Fahrzeugrad und Karrosserie des Fahrzeugs z. B. durch Karosserieteile, wie etwa dem Radkasten, beeinträchtigt wird.

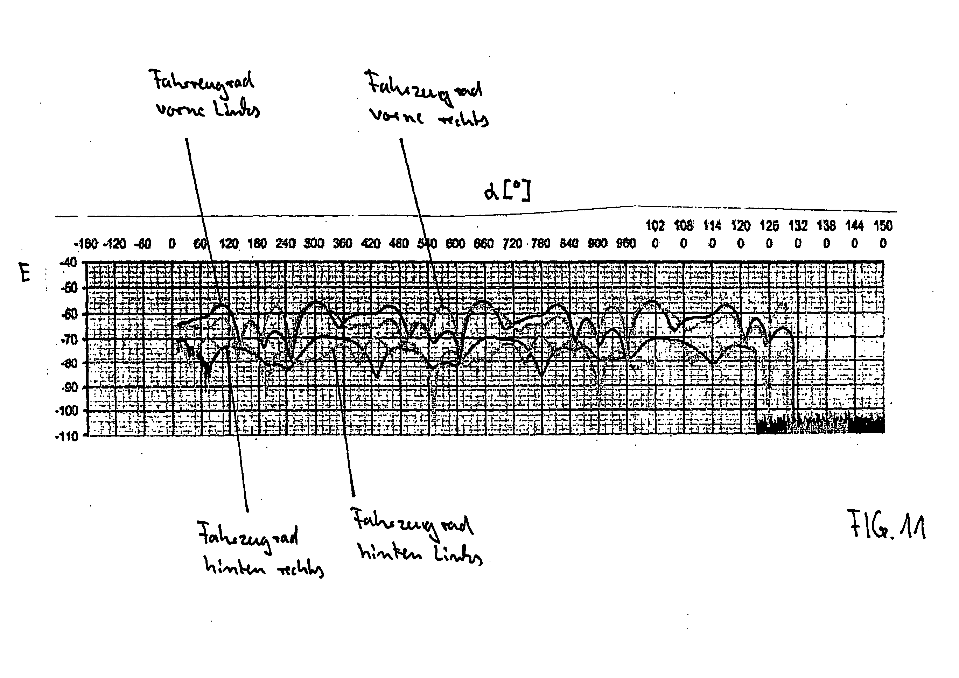

Fig. 11 zeigt den Verlauf der Feldstärken E der von den Radelektroniken der vier Räder empfangenen Signale. Es ist zu erkennen, dass die Feldstärken E stark von den Radwinkelpositionen α abhängen. Wenn nun z. B. die nötige Schwelle zum korrekten Empfangen eines Sendesignals bei etwa 85dBm liegt, kann das von der Radelektronik des vorderen linken Rades gesendeten Signals bei einer Stellung von ca. 190° nicht empfangen werden. Wenn jedoch gerade immer bei dieser Position oder z. B. bei 180° (das Rad dreht sich während des Sendens weiter) gesendet werden soll, wäre ein Empfang dieses Sendesignals nicht möglich.

Daher ist es bisweilen vorteilhaft, nicht immer an derselben Rotationsposition Sendesignale zu emittieren, sondern z. B. eine willkürliche, statisch verteilte Verzögerung mit einzubauen. Es wird dabei immer noch eine dedizierte Position erkannt, nach der Erkennung jedoch eine bestimmte Zeit abgewartet. Für das dann stattfindende Aussenden des Sendesignals wird die Wartezeit als Information mitgesendet, so dass die Empfangseinheit diese Wartezeit wieder herausrechnen kann.

Die Wartezeit kann entweder zeitbasiert oder winkelbasiert sein, z. B. je nachdem was in der Radelektronik vom Ablauf des Algorithmus her besser zu implementieren ist. So entspricht z. B. eine gleiche Anzahl von Abtastintervallen bei einer adaptiven Abtastzeit in guter Näherung einer winkelbasierten Verzögerung. Bei der Wahl der Verzugszeiten ist ein vorgegebener Satz von Werten sinnvoll, der bei den Emissionen entweder der Reihe nach durchgegangen oder aus dem zufällig ausgewählt wird. Somit ist es möglich, das Aussenden der Signale statistisch gleichmäßig auf die gesamten 360° eines Fahrzeugrades zu verteilen.

In der Praxis kann es immer wieder vorkommen, dass einzelne Übertragungen nicht korrekt empfangen werden, z. B. wegen Funkstörungen oder Auslöschungen durch Sendesignale von anderen Radelektroniken. Aus diesem Grund ist es bisweilen vorteilhaft, die Informationen der Radelektroniken redundant zu versenden. Demzufolge werden einzelne Frames von Sendesignalen gesendet, die identische Informationen beinhalten. Fig. 12 zeigt, wie drei Frames 40 der Dauer T1 einen so genannten Burst 41 der Dauer T2 eines gesendeten Messsignals bilden. Zwischen den einzelnen Frames 40 eines Bursts 41sind vordefinierte Pausen unterschiedlicher oder gleicher Dauer T3, T4 vorhanden, die auch wiederum dafür sorgen sollen, dass die Frames möglichst gleichmäßig auf den Radumfang von 360° verteilt sind.

Im Rahmen des positionsbezogenen Sendens der Reifenelektroniken ist es deshalb nötig, dieses Verfahren anzupassen. Es ist notwendig, dass man aus dem Empfang nur eines oder zwei der Frames eines Bursts auf die ursprüngliche Detektion der Position zurückrechnen kann. Dazu ist es notwendig, dass jeder Frame eine Information trägt, um den wievielten Frame es sich innerhalb des Bursts handelt. Zusätzlich ist es natürlich auch notwendig, die Information der im vorigen Absatz beschriebenen Verzugszeit in jedem Frame zu enthalten. Mit diesem Wissen und dem Wissen über die Pausenzeiten zwischen den Frames kann dann sukzessive auf den ursprünglichen Detektionspunkt und damit die Rotationsposition zurückgerechnet werden.

Obgleich die vorliegende Erfindung vorstehend anhand bevorzugter Ausführungsbeispiele beschrieben wurde, ist sie nicht darauf beschränkt, sondern auf vielfältige Art und Weise modifizierbar.

Für die Ermittlung des Reifendruckes können bekannte Verfahren, beispielsweise direkt messende Reifendruckermittlungssysteme, verwendet werden. Direkt messende Systeme ermitteln z.B. mittels eines geeigneten Drucksensors direkt den im Reifen herrschenden Reifendruck. Indirekt messende Systeme ermitteln beispielsweise die Quer- oder Längsbeschleunigung eines Reifens und leiten daraus den Reifendruck ab. Darüber hinaus lassen sich der Reifendruck auch durch Auswertung von Drehzahl- oder Schwingungseigenschaften der Fahrzeugräder ermitteln.

Darüber hinaus ist die vorliegende Erfindung nicht notwendigerweise auf ein in einem PKW eingesetzten Reifeninformationsvorrichtung beschränkt. Vielmehr lässt sich die Erfindung bei beliebigen Fahrzeugen, wie z.B. Lastkraftfahrzeuge, Motorräder, Busse, Anhänger von Fahrzeugen und dergleichen, ebenfalls vorteilhaft einsetzen.

Auch die Ausgestaltung der Reifeninformationsvorrichtung, insbesondere hinsichtlich der Zahl der verwendeten Radelektroniken, Sende-/Empfangseinrichtungen, der Ausgestaltung der programmgesteuerten Einrichtung und der Radelektroniken, Art der Kommunikation zwischen Radelektronik und fahrzeugseitiger Sende-/Empfangseinrichtung, etc., lässt sich variieren.

An dieser Stelle wird darauf hingewiesen, dass die Erfindung auch auf die Lokalisierung von Reifen als solche bezogen ist, die Patentansprüche also auch im Sinne von "Vorrichtungen und Verfahren zur Lokalisierung zumindest eines Reifens an einem Fahrzeug" zu lesen ist. Der Begriff "Rad" wäre dann auch im übrigen Teil der Anmeldung gedanklich durch "Reifen" zu ersetzen.

Statt der Verwendung von vier, den jeweiligen Rädern bzw. Radelektroniken zugeordneten Empfangseinrichtungen wäre auch denkbar, lediglich einen einzige zentrale Empfangseinrichtung zu verwenden, die dann dazu ausgelegt ist, die Sendesignale von allen Radelektroniken zu empfangen und auszuwerten.

### Bezugszeichenliste

- 10: Fahrzeug
- 11: Fahrzeugräder
- 12: Radelektroniken
- 13: Sende-/Empfangseinrichtungen
- 14: Steuergerät der Reifeninformationsvorrichtung
- 15: programmgesteuerte Einrichtung, Mikrocontroller
- 16: Speichereinrichtung
- 17: Fahrzeuginformationssystem
- 20: Radfelge
- 21: Radreifen
- 22: (erster) Sensor
- 23: Auswerteeinrichtung
- 24: Steuereinrichtung
- 25: Sendeeinrichtung
- 26: Abtasteinrichtung
- 27: Filtereinrichtung
- 28: Phasenverschiebeeinrichtung
- 29: (zweiter) Sensor
- 30: rotatorische Position eines Punktes auf dem Rad
- 31: Fahrbahn
- 40: Frame
- 41: Burst
- 42: Pause

- a: obere Position
- b: Latscheingang
- c: Latschausgang
- d: unterste Position
- e: 3-Uhr Position
- f: 9-Uhr Position
- g: Erdbeschleunigung
- t: Zeit

- A: Beschleunigung
- E: Feldstärke
- T1 - T4: Dauer
- V: Geschwindigkeit
- X1: Messsignal
- X2: Informationssignal
- X3: Steuersignal
- X4: Sendesignal
- X5: Informationssignal

- α: Rotationswinkel

## Patentansprüche

1. Radelektronik (12) für eine Reifeninformationsvorrichtung, die im eingebauten Zustand in einem Fahrzeugrad (11) eines Fahrzeugs (10) angeordnet ist, enthaltend:
einen ersten Sensor (22), der dazu ausgelegt ist, ein Messsignal (X1) aufzunehmen, welches zumindest einen ersten radspezifischen Parameter aufweist, und
eine Auswerteeinrichtung (23), die dazu ausgelegt ist, aus dem Messsignal (X1) eine aktuelle Rotationsposition (a-f) des Fahrzeugrades (11) zum Zeitpunkt der Messung zu ermitteln, **dadurch gekennzeichnet,**
**dass** die Auswerteeinrichtung (23) aufweist:
- eine Filtereinrichtung (27) zur Filterung des Messsignals (X1) und
- eine Phasenverschiebeeinrichtung (28), die eine durch ein Filtern des Messsignals (X1) erzeugte Phasenverschiebung reduziert und vorzugsweise kompensiert.

2. Radelektronik nach Anspruch 1,
**dadurch gekennzeichnet,**
**dass** eine Sendeeinrichtung zur Aussendung eines Sendesignals (X4) vorgesehen ist, welches eine Information über die ermittelte Rotationsposition (a-f) des Fahrzeugrades (11) und/oder zweite radspezifische Parameter (X5) enthält.

3. Radelektronik nach Anspruch 2,
**dadurch gekennzeichnet,**
**dass** eine Steuereinrichtung (24) vorgesehen ist, welche die Sendeeinrichtung derart steuert, dass das Sendesignal (X4) in einer vorgebbare Rotationsposition (a-f) des Fahrzeugrades (11) oder einem vorgebbaren Winkelbereich des Fahrzeugrades (11), insbesondere Zeit- und/oder Rotationswinkel-basiert, ausgesendet wird.

4. Radelektronik nach Anspruch 2,
**dadurch gekennzeichnet,**
**dass** eine Steuereinrichtung (24) vorgesehen ist, welche die Sendeeinrichtung derart steuert, dass das Sendesignal (X4) während einer oder mehrerer Umdrehungen des Fahrzeugrades (11) mehrfach, insbesondere bis zu 3 bis 10 mal und vorzugsweise bis zu 3 bis 5 mal, ausgesendet wird.

5. Radelektronik nach einem der vorherigen Ansprüche,
**dadurch gekennzeichnet,**
**dass** der erste Sensor (22) als Lagesensor oder Lageschalter ausgebildet ist, der anhand der Detektion von bekannten Referenzbereichen oder Referenzpunkten die Rotationsposition (a-f) eines vorgegebenen Punktes auf dem Fahrzeugrad (11) bestimmt.

6. Radelektronik nach einem der vorherigen Ansprüche,
**dadurch gekennzeichnet,**
**dass** der erste Sensor (22) als magnetisch-sensitiver Sensor, insbesondere als Hallsensor oder als Reed-Schalter, ausgebildet ist, der die Rotationsposition (a-f) des Fahrzeugrades (11) durch Messung eines bekannten Magnetfeldes bestimmt.

7. Radelektronik nach einem der vorherigen Ansprüche,
**dadurch gekennzeichnet,**
**dass** der erste Sensor (22) als Inertialsensor, insbesondere ein Beschleunigungssensor oder Schocksensor, ausgebildet ist, der die Rotationsposition (a-f) anhand einer durch eine Geschwindigkeitszunahme oder -abnahme des Fahrzeugrades (11) ermittelten Beschleunigung oder Ableitung davon bestimmt.

8. Radelektronik nach einem der vorherigen Ansprüche,
**dadurch gekennzeichnet,**
**dass** der erste Sensor (22) als Piezosensor ausgebildet ist, der Veränderungen der Krümmung eines Reifens (21) des Fahrzeugrades (11) bestimmt.

9. Radelektronik nach einem der vorherigen Ansprüche,
**dadurch gekennzeichnet,**
**dass** die Auswerteeinrichtung (23) dazu ausgebildet ist, eine gravitations-basierte Auswertung der Messsignale (X1), insbesondere der gemessenen Beschleunigung oder der Ableitung der gemessenen Beschleunigung, vorzunehmen.

10. Radelektronik nach einem der vorherigen Ansprüche,
**dadurch gekennzeichnet,**
**dass** die Auswerteeinrichtung (23) eine Abtasteinrichtung (26) aufweist, die zur Ermittlung von Abtastwerten das Messsignal (X1) abtastet, wobei die Auswertung in der Auswerteeinrichtung (23) anhand der ermittelten Abtastwerte erfolgt.

11. Radelektronik nach Anspruch 10,
**dadurch gekennzeichnet,**
**dass** ein Geschwindigkeitssensor vorgesehen ist, der die Geschwindigkeit des Fahrzeugrades (11) ermittelt, und dass die Abtasteinrichtung (26) derart ausgebildet ist, dass sie eine adaptive Anpassung der Abtastzeit vornimmt, bei der das Abtasten des Messsignals (X1) abhängig von der ermittelten Geschwindigkeit des Fahrzeugrades (11) erfolgt.

12. Radelektronik nach einem der vorherigen Ansprüche,
**dadurch gekennzeichnet,**
**dass** die Filtereinrichtung (27) eine Filtereinrichtung mit konstanter, linearer Phasenverschiebung, insbesondere ein Besselfilter, ist.

13. Radelektronik nach einem der vorherigen Ansprüche,
**dadurch gekennzeichnet,**
**dass** zumindest ein zweiter Sensor (29) vorgesehen ist, der dazu ausgelegt ist, zweite radspezifische Parameter (X5), wie z.B. einen aktuellen Reifendruck, das Reifenprofil, eine Längsbeschleunigung des Fahrzeugrades (11), Querbeschleunigung des Fahrzeugrades (11), eine Reifentemperatur, zu ermitteln.

14. Radelektronik nach einem der vorherigen Ansprüche,
**dadurch gekennzeichnet,**
**dass** Mittel vorgesehen sind, welche im Sendesignal (X4) eine Information hinterlegt, welche kennzeichnet, ob eine vorgegebene Radposition oder rotatorische Position bestimmt werden konnte oder nicht.

15. Fahrzeugrad (11), insbesondere für ein mit einer Reifeninformationsvorrichtung ausgestattetes Fahrzeug (10), welches eine Felge (20) und einen Reifen (21) aufweist, wobei das Fahrzeugrad (11) ferner mindestens eine im oder an dem Fahrzeugrad (11) angeordnete Radelektronik (12) nach einem der Ansprüche 1 oder 13 aufweist.

16. Fahrzeug (10), insbesondere Personenkraftfahrzeug, mit mehreren Rädern und mit einer Reifeninformationsvorrichtung, wobei mindestens ein Fahrzeugrad (11) mit einer Radelektronik (12) nach einem der Ansprüche 1 oder 13 ausgestattet ist.

## Claims

1. Wheel electronics unit (12) for a tire information device which, in the installed state, is arranged in a vehicle wheel (11) of a vehicle (10), containing:
a first sensor (22) which is designed for recording a measurement signal (X1) which has at least one first wheel-specific parameter, and
an evaluating device (23) which is designed for determining from the measurement signal (X1) a current rotational position (a-f) of the vehicle wheel (11) at the time of the measurement, **characterized in that** the evaluating device (23) has:
- a filter device (27) for filtering the measurement signal (X1), and
- a phase shifting device (28) which reduces, and preferably compensates for, a phase shift generated by filtering the measurement signal (X1).

2. Wheel electronics unit according to Claim 1, **characterized in that** a transmitting device for transmitting a transmit signal (X4) is provided which contains an information item about the determined rotational position (a-f) of the vehicle wheel (11) and/or second wheel-specific parameters (X5).

3. Wheel electronics unit according to Claim 2, **characterized in that** a control device (24) is provided which controls the transmitting device in such a manner that the transmit signal (X4) is sent out in a predeterminable rotational position (a-f) of the vehicle wheel (11) or a predeterminable angular range of the vehicle wheel (11), particularly on the basis of time and/or angle of rotation.

4. Wheel electronics unit according to Claim 2, **characterized in that** a control device (24) is provided which controls the transmitting device in such a manner that the transmit signal (X4) is sent out during one or more rotations of the vehicle wheel (11) several times, particularly up to 3 to 10 times and preferably up to 3 to 5 times.

5. Wheel electronics unit according to one of the preceding claims, **characterized in that** the first sensor (22) is constructed as position sensor or position switch which determines the rotational position (a-f) of a predetermined point on the vehicle wheel (11) by detecting known reference areas or reference points.

6. Wheel electronics unit according to one of the preceding claims, **characterized in that** the first sensor (22) is constructed as a magnetically sensitive sensor, especially as a Hall sensor or as a Reed switch which determines the rotational position (a-f) of the vehicle wheel (11) by measuring a known magnetic field.

7. Wheel electronics unit according to one of the preceding claims, **characterized in that** the first sensor (22) is constructed as inertial sensor, especially as acceleration sensor or shock sensor which determines the rotational position (a-f) by means of an acceleration or derivation therefrom determined by an increase or a decrease in acceleration of the vehicle wheel (11).

8. Wheel electronics unit according to one of the preceding claims, **characterized in that** the first sensor (22) is constructed as a piezoelectric sensor which determines changes in the curvature of a tire (21) of the vehicle wheel (11).

9. Wheel electronics unit according to one of the preceding claims, **characterized in that** the evaluating device (23) is constructed for performing a gravitation-based evaluation of the measurement signals (X1), particularly of the measured acceleration or of the derivation of the measured acceleration.

10. Wheel electronics unit according to one of the preceding claims, **characterized in that** the evaluating device (23) has a sampling device (26) which samples the measurement signal (X1) for determining samples, wherein the evaluation in the evaluating device (23) is carried out by means of the samples determined.

11. Wheel electronics unit according to Claim 10, **characterized in that** a speed sensor is provided which determines the speed of the vehicle wheel (11) and **in that** the sampling device (26) is constructed in such a manner that it performs an adaptive adaptation of the sampling time in which the measurement signal (X1) is sampled in dependence on the determined speed of the vehicle wheel (11).

12. Wheel electronics unit according to one of the preceding claims, **characterized in that** the filter device (27) is a filter device having a constant, linear phase shift, especially a Bessel filter.

13. Wheel electronics unit according to one of the preceding claims, **characterized in that** at least one second sensor (29) is provided which is designed for determining second wheel-specific parameters (X5) such as, e.g., a current tire pressure, the tire profile, a longitudinal acceleration of the vehicle wheel (11), transverse acceleration of the vehicle wheel (11), a tire temperature.

14. Wheel electronics unit according to one of the preceding claims, **characterized in that** means are provided which deposit in the transmit signal (X4) an information item which identifies whether a predetermined wheel position or rotational position could be determined or not.

15. Vehicle wheel (11), particularly for a vehicle (10) equipped with a tire information device, which wheel has a rim (20) and a tire (21), wherein the vehicle wheel (11) also has at least one wheel electronics unit (12), arranged in or at the vehicle wheel (11), according to one of Claims 1 or 13.

16. Vehicle (10), particularly a passenger car, having a number of wheels and having a tire information device, wherein at least one vehicle wheel (11) is equipped with a wheel electronics unit (12) according to one of Claims 1 or 13.

## Revendications

1. Electronique de roue (12) pour un dispositif d'information sur le pneu, qui est agencée, à l'état monté, dans une roue de véhicule (11) d'un véhicule (10), contenant :
un premier capteur (22), qui est conçu pour enregistrer un signal de mesure (X1), qui présente au moins un premier paramètre spécifique à la roue, et
un dispositif d'évaluation (23), qui est conçu pour déterminer, à partir du signal de mesure (X1), une position effective de rotation (a-f) de la roue de véhicule (11) au moment de la mesure,
**caractérisée en ce que** le dispositif d'évaluation (23) présente :
- un dispositif de filtrage (27) pour filtrer le signal de mesure (X1), et
- un dispositif de déphasage (28), qui réduit et de préférence compense le déphasage produit par un filtrage du signal de mesure (X1).

2. Electronique de roue selon la revendication 1, **caractérisée en ce qu'**un dispositif d'émission est prévu pour émettre un signal d'émission (X4) qui contient une information sur la position déterminée de rotation (a-f) de la roue de véhicule (11) et/ou des deuxièmes paramètres (X5) spécifiques à la roue.

3. Electronique de roue selon la revendication 2, **caractérisée en ce qu'**est prévu un dispositif de commande (24) qui commande le dispositif d'émission de telle sorte que le signal d'émission (X4) soit émis dans une position de rotation (a-f) prédéfinissable de la roue de véhicule (11) ou dans une zone angulaire prédéfinissable de la roue de véhicule (11), en particulier sur la base du temps et/ou de l'angle de rotation.

4. Electronique de roue selon la revendication 2, **caractérisée en ce qu'**est prévu un dispositif de commande (24) qui commande le dispositif d'émission de telle sorte que le signal d'émission (X4) soit émis, pendant une ou plusieurs révolutions de la roue de véhicule (11) à plusieurs reprises, en particulier jusqu'à 3 à 10 fois et de préférence jusqu'à 3 à 5 fois.

5. Electronique de roue selon l'une des revendications précédentes, **caractérisée en ce que** le premier capteur (22) est conformé comme un capteur de position ou un interrupteur de position, qui à l'aide de la détection de zones de référence ou de points de référence connus, détermine la position de rotation (a-f) d'un point prédéfini sur la roue de véhicule (11).

6. Electronique de roue selon l'une des revendications précédentes, **caractérisée en ce que** le premier capteur (22) est conformé comme un capteur à sensibilité magnétique, en particulier un capteur à effet de Hall ou un interrupteur à lames souples, qui détermine la position de rotation (a-f) de la roue de véhicule (11) via la mesure d'un champ magnétique connu.

7. Electronique de roue selon l'une des revendications précédentes, **caractérisée en ce que** le premier capteur (22) est conformé comme un capteur à inertie, en particulier un capteur d'accélération ou un capteur de choc, qui détermine la position de rotation (a-f) à l'aide d'une accélération, déterminée par une augmentation ou une diminution de la vitesse de la roue de véhicule (11), ou d'une dérivée de cette accélération.

8. Electronique de roue selon l'une des revendications précédentes, **caractérisée en ce que** le premier capteur (22) est conformé comme un capteur piézo-électrique qui détermine des modifications de la courbure d'un pneu (21) de la roue de véhicule (11).

9. Electronique de roue selon l'une des revendications précédentes, **caractérisée en ce que** le dispositif d'évaluation (23) est conformé pour procéder à une évaluation, fondée sur la gravitation, des signaux de mesure (X1), en particulier de l'accélération mesurée ou de la dérivée de l'accélération mesurée.

10. Electronique de roue selon l'une des revendications précédentes, **caractérisée en ce que** le dispositif d'évaluation (23) présente un dispositif de balayage (26) qui balaye le signal de mesure (X1) pour déterminer des valeurs de balayage, dans laquelle l'évaluation a lieu dans le dispositif d'évaluation (23) à l'aide des valeurs de balayage déterminées.

11. Electronique de roue selon la revendication 10, **caractérisée en ce qu'**est prévu un capteur de vitesse qui détermine la vitesse de la roue de véhicule (11), et **en ce que** le dispositif de balayage (26) est conformé de telle sorte qu'il procède à un ajustement adaptatif du temps de balayage, au cours duquel le balayage du signal de mesure (X1) a lieu en fonction de la vitesse déterminée de la roue de véhicule (11).

12. Electronique de roue selon l'une des revendications précédentes, **caractérisée en ce que** le dispositif de filtrage (27) est un dispositif de filtrage avec un déphasage linéaire constant, en particulier un filtre de Bessel.

13. Electronique de roue selon l'une des revendications précédentes, **caractérisée en ce qu'**est prévu au moins un deuxième capteur (29) qui est conçu pour déterminer des deuxièmes paramètres (X5) spécifiques à la roue, tels que par exemple une pression effective du pneu, la sculpture du pneu, une accélération longitudinale de la roue de véhicule (11), une accélération transversale de la roue de véhicule (11), une température du pneu.

14. Electronique de roue selon l'une des revendications précédentes, **caractérisée en ce que** sont prévus des moyens qui consignent dans le signal d'émission (X4) une information qui indique si une position de roue ou une position rotative prédéfinie a pu ou non être déterminée.

15. Roue de véhicule (11), en particulier pour un véhicule (10), équipé d'un dispositif d'information sur le pneu, qui présente une jante (20) et un pneu (21), dans laquelle la roue de véhicule (11) présente en outre au moins une électronique de roue (12) selon l'une des revendications 1 ou 13, agencée dans ou contre la roue de véhicule (11).

16. Véhicule (10), en particulier véhicule automobile pour le transport des personnes, avec plusieurs roues et avec un dispositif d'information sur le pneu, dans lequel au moins une roue de véhicule (11) est équipée d'une électronique de roue (12) selon l'une des revendications 1 ou 13.
